(19)

Europäisches
Patentamt
European
Patent Office
Office européen
des brevets

(11)     **EP 2 516 729 B1**

(12)     **EUROPEAN PATENT SPECIFICATION**

(45) Date of publication and mention
of the grant of the patent:
**29.07.2015 Bulletin 2015/31**

(21) Application number: **10798550.9**

(22) Date of filing: **20.12.2010**

(51) Int Cl.:
***D07B 1/06*** *(2006.01)*

(86) International application number:
**PCT/EP2010/070262**

(87) International publication number:
**WO 2011/076746 (30.06.2011 Gazette 2011/26)**

(54) **A BRASS COATED WIRE WITH A ZINC GRADIENT IN THE COATING AND ITS METHOD OF MANUFACTURING**

MESSING BESCHICHTETER DRAHT MIT EINEM ZINKGRADIENT IN DER BESCHICHTUNG UND DESSEN HERSTELUNGSVERFAHREN

FIL D'ACIER ENROBÉ D'UN ALLIAGE DE LAITON AVEC UN GRADIENT DE ZINC DEDANS ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2009 EP 09180692**

(43) Date of publication of application:
**31.10.2012 Bulletin 2012/44**

(73) Proprietor: **NV Bekaert SA
8550 Zwevegem (BE)**

(72) Inventors:
 • **BUYTAERT, Guy
   B-9170 Sint-Gillis-Waas (BE)**
 • **SOMERS, Albert
   B-8400 Oostende (BE)**

(74) Representative: **Seynhaeve, Geert Filiep
NV Bekaert SA
D.I.E.
Bekaertstraat 2
8550 Zwevegem (BE)**

(56) References cited:
  **EP-A1- 0 230 071     EP-A1- 0 343 254
  EP-A1- 1 295 985     GB-A- 2 076 320
  US-A- 4 677 033     US-A1- 2003 003 319**

 • **VAN OOIJ, W J: "Industrial Applications of XPS:
   Study of Polymer to Metal Adhesion Failure",
   SURFACE SCIENCE, vol. 89, no. 1-3, 10 April 1979
   (1979-04-10), pages 165-173, XP002578085, cited
   in the application**

**Description**

Technical Field

The invention relates to steel cords suitable for reinforcing rubber articles. The steel cords show improved adhesion behaviour at short curing times as well as after ageing. The rubber articles can be tyres of any kind such as truck, passenger or off-the-road tyres, hoses or flexible pipes, transmission belts, conveyor belts, rubber tracks, sawing ropes or other articles wherein a rubber reinforcement composite is of use.

Background Art

Even before the first introduction of a radial tyre (the "Michelin X", in 1948) it was known that brass coated steel cord formed an excellent composite with rubber. Key to this was the adhesion between the rubber and the brass to such a high level that "the rubber tears apart rather than the rubber tears from the steel cord" (GB 515 734 of 1939). Continued effort has since been invested in improving this brass-on-steel-cord to rubber bond.

However, the strength of the bond is not stable and evolves under static and dynamic influences. It has therefore become customary to determine the bond strength at different stages:

- at regular cure (RC) which is the TC90 time plus 5 minutes, TC90 being that time where the rubber reaches 90% of its maximum torque on a rheometer curve taken at vulcanisation temperature
- at over cure (OC) when the rubber is baked well over its normal cure time (normally taken two times the time of a regular cure or longer)
- at under cure (UC) when the rubber is vulcanised for about half of the regular curing time.
- after cured humidity (CH): RC samples are held at 93°C in a 95% relative humidity environment for 3, 7 or 14 days
- after steam aging (SA): in which RC samples are steam cooked at 105°C for 1 or 2 days.

These accelerated tests more or less simulate what a tyre has to endure during its total useful life. One therefore does not only have to take the initial adhesion level into account, but must also ensure adhesion retention under the different circumstances cited.

The strength of the bond after different vulcanisation conditions and/or aging treatments is generally assessed in a pull-out test as put forward in the ASTM D 2229-04 standard, further detailed in the BISFA ("The International Bureau for the Standardisation of Man-made Fibers") brochure "Internationally agreed methods for testing of steel tyre cord', 1995 Edition, "E12 Determination of static adhesion to rubber compounds'. In this test steel cords are embedded in a block shaped rubber and pulled out of the rubber along the axial direction of the steel cord after vulcanisation. The maximum force (in N) attained is noted as the 'pull-out force'. In addition a qualitative assessment of 'Rubber Coverage Degree' (RCD) is made (usually on a percent scale). In order to increase the discriminative power of the test, several single results are averaged.

Presently, the vast body of rubber-to-brass adhesion research has settled around what can be called a "standard adhesion model" for brass to rubber adhesion in sulphur vulcanizable compounds. The evolution in this model can be followed through a series of landmark papers:

- G. Haemers, "The Influence of the Interface Reaction on the Rubber-to-brass Adhesion and Adhesion Retention", Adhesion 4, edited by K.W. Allen, Applied Science Publishers Ltd. Barking, Essex, England, 1980;
- W.J. Van Ooij, "Mechanisms and Theories of Rubber Adhesion to Steel Tire Cords, An Overview, presented at the 124th ACS Rubber Division Meeting IRC 1983, paper #59 and published in Rubber Chemistry and Technology, Volume 57, 1984, page 421;
- W.J. Van Ooij, "Rubber-Brass Bonding", Chapter 6, p163-195, Rapra Technology Ltd., 2001.

As the number of papers around this topic increases exponentially, review guides such as:

- W.S. Fulton, "Steel tire cord-rubber adhesion, including the contribution of cobalt" in Rubber Chemistry and Technology, Volume 78, 2005, page 426-456.
- W.J. Van Ooij, Prasan B. Harakuni, and Guy Buytaert, "Adhesion of Steel Tire Cord to Rubber- A Reviev", in Rubber Chemistry and Technology, Volume 82, ed. 3, 2009, page 315-339.

have become indispensable.

The standard adhesion model will be described in what follows. The intention is not to be complete but to illustrate the salient points that must be understood in order to appreciate the non-obviousness of the invention.

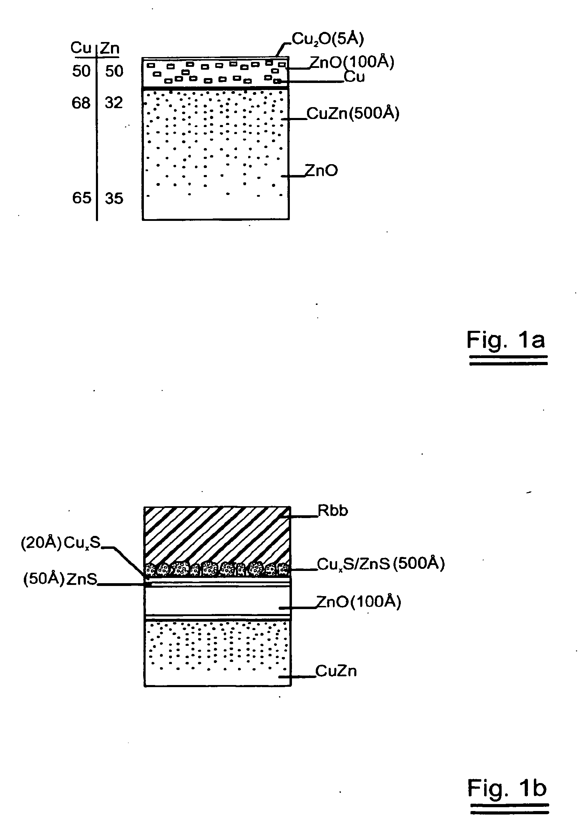

On the brass coated steel cord - under normal conditions of temperature and atmosphere - a stratified layer will form at the air-brass interface as shown in FIGURE 1 a. Copper and zinc - both being metals - readily oxidise with oxygen. However, zinc atoms - having a larger affinity to oxygen - maintain diffusion to the surface longer than copper and a zinc oxide ZnO (100 A) layer - wherein remaining metallic copper (Cu) inclusions are present - forms below the outer surface copper oxide layer $Cu_2O$ (5 A). In the top of the bulk brass layer CuZn(500 Å), zinc oxide ZnO islands form by incorporation of oxygen. The numbers between brackets give approximate thickness indications of the respective layers. The resulting Cu|Zn balance in mass percent throughout the coating is indicated to the left of the drawing of FIGURE 1a.

The unvulcanised rubber compound is a highly viscous liquid mixture of various constituents of which the following play a main role in the adhesion process:

- Rubber: natural rubber (NR), styrene-butadiene rubber (SBR), or butadiene rubber (BR). The degree of bond saturation has an influence on the bonding.
- Sulphur: mixed under the form of cyclo-octasulphur ($S_8$) is crucial in bond formation and of course also in the vulcanisation of the rubber.
- Accelerator ingredients initiate and catalyse sulphur incorporation into the rubber random polymer network. They are usually of the sulfenamide-type such as CBS (n-cylcohexyl-2-benzothiazole sulfenamide), DCBS (n,n-dicyclohexyl-2-benzothiazole sulfenamide) and/or TBBS (n-tertiarybutyl-2-benzothiazole sulfenamide). They are crucial for bond formation as they form together, with sulphur, active sulphurating agents that donate sulphur for the cross-linking of the rubber and the formation of the sulphide interfacial film.
- Cobalt containing organic complexes - usually a cobalt organic salt such as cobalt naphtenate, cobalt stearates or cobalt boron decanoate complexes - are mixed in as adhesion promoters. The prime object of introducing these compounds is not to increase the overall level of adhesion, but rather to improve adhesion retention over time (see further).

Other constituents are processing oils (for mixing the rubber), fillers (such as carbon black or silica, to increase the mechanical properties of the cured rubber), antioxidants (e.g. of the amine type, to reduce deterioration of the rubber properties), an activator system (such as zinc oxide in combination with stearic acid), resins (such as hexamethoxymethyl melamine (HMMM) or resorcinol formaldehyde resin (RFR, resins seem to have a synergistic effect in combination with cobalt salt on adhesion) and other ingredients are added for other properties.

It is generally accepted that during vulcanisation of the rubber-brass composite a layer of sulphides forms on the brass-rubber interface that preferably comprises non-stoichiometric copper sulphide $Cu_xS$ (with 'x' around 1.8) and less of zinc sulphide. The copper sulphide grows dendritically ("like a tree") into the viscous, liquid rubber before the vulcanisation reaction is triggered by the accelerator. The vulcanised rubber intercalates with the copper sulphide dendrites and gives a good bond. The sulphide layer should not become thicker than about 250 nm. Zinc sulphide (ZnS) grows together with the $Cu_xS$ but the speed by which ZnS grows is reduced by the presence of the cobalt compound. ZnS on itself does not add to the bonding strength.

The various elements of an adhesion layer are indicated in FIGURE 1 b wherein 'Rbb' indicates the vulcanised rubber, '$Cu_xS$/ZnS(500 A)' indicates the dendritic sulphide layer, together with '$Cu_xS$ (20 A)' and 'ZnS (50 A)' layers. Note that the metallic copper has disappeared out of the ZnO (100 A) layer.

The initial adhesion strength of the brass rubber bond depends on the composition, thickness and morphology of this sulphide layer, which on its turn is determined by (from the steel cord side only):

- the copper content of the brass coating which on its turn determines the nature of the ZnO layer. It has been found that high copper coatings (above 67.5wt% Cu, containing mainly $\alpha$-phase brass) results in non-homogeneous ZnO coatings after cold working, while low copper coatings (e.g. 63.5 wt% Cu, containing $\alpha$- and $\beta$-phase brass) results in a thin, homogenous closed ZnO coating after cold working. The latter coating is much preferred as it reduces the growth of stoichiometric $Cu_2S$ which precipitates at the rubber-brass interface as brittle crystals that do not add to the adhesion of the sulphide layer. A homogenous ZnO coating also leads to a thinner and homogeneous $Cu_xS$ layer. It is therefore generally accepted that the presence of a closed and homogeneous ZnO layer is indispensable for obtaining a good adhesion level.
- The purity of the surface of the coating i.e. the presence of reactivity inhibitors (such as lubrication residues) inhibits the formation of $Cu_xS$.
- Also the brass coating should not be considered to be a 100% closed coating. A minor part of the steel comes at the surface but this is not detrimental for adhesion retention.

Note that in many cases the desire to have a zinc oxide layer at the surface of the coating is expressed in terms of having a low copper concentration at the surface. See e.g. EP 0 265 993.

The loss in adhesion after OC, CH, or SA treatment is primarily attributed to the further 'dezincification' of the brass layer underlying the sulphide film. Under influence of heat and humidity Zn will further diffuse out of the brass layer till underneath the sulphide layer and thicken the layer of ZnO while also $Zn(OH)_2$ will form. This results in a weakening of the bond layer. The presence of cobalt compounds in the rubber greatly reduces this diffusion as it is presumed that the $Co^{2+}$ ions will modify the defect structure of the zinc oxide - and also copper sulphide - and thereby make it less penetratable to $Zn^{2+}$ ions. The use of cobalt containing organic complexes is therefore ubiquitous in the tyre industry and the rubber industry in general.

However, the use of cobalt containing compounds in rubber also has a profound influence on the mechanical properties of the cured rubber over time such as an increased crack propagation speed. This is because cobalt - like most transition metals - is an oxidation catalyst that promotes the oxidation of the diene rubber molecules. Hence, seeking the optimum amount of cobalt compound in the adhesion rubber to find the balance between adhesion retention and rubber aging is a continuous task for every tyre maker.

Over and above the amount of cobalt that is brought into the environment by the billions of tyres that are mostly recycled by incineration (e.g. in cement kilns) is immense and posses a threat to the environment. Finally cobalt is a strategic material and is quite expensive. Hence, by adding it to the whole compound, one adds too much, since it only has a positive function in the adhesion layer that is about 100 nanometer 'thick'.

There has therefore been a constant strive to find ways to at least reduce the amount of cobalt in a tyre by fixing the cobalt to the steel cord surface i.e. to put it there only where it is needed. This would optimise adhesion retention, reduce rubber aging, reduce crack growth and reduce cobalt use.

Attempts in various directions have been made such as:

- Give filaments an oil treatment immediately after drawing wherein the oil contains a cobalt compound (JP 2003171887, US 7152644, EP 1243692).
- Give filaments a surface treatment with agents that comprise a silane coupling agent and cobalt containing compound (KR 10-2001-0019497, WO 2006/001199)
- Draw filaments in a lube that contains cobalt (US 6372697, EP 1172430).

These solutions have the drawback that cobalt containing oils or lubricants are introduced on the work floor with associated health and safety problems. In addition the cobalt is not metallically bound into the brass and can be spilled in the further processing of the filaments.

- Other methods seek to apply the cobalt in metallic form on top of the brass coating by means of Physical Vapour Deposition methods (EP 0314230, EP 0872511).

These solutions have the drawback that the application method is expensive and energy consuming.

- The first developed methods to incorporate cobalt into a brass coating were electrolytic, whereby sequential layers of Cu, Co and Zn are formed on an intermediate diameter wire followed by inter-diffusion by heat: US 4255496, US 4265678. The resulting half-product is further drawn to final diameter filament.

When following the latter processing, cobalt is incorporated in its metallic state into the brass coating which is much less harmful for the environment and health. The use of cobalt containing substances is limited to the intermediate wire area, which is much better controllable with respect to safety and health precautions.

Besides cobalt, other metals have been identified and proven to bring improved adhesion retention as well. Hence, alternatively to cobalt (Co) the following group of metals can be used as the third metal in the ternary alloy:

- nickel (Ni): see e.g. EP 0343254, GB 2039580
- iron (Fe), see e.g. US 4446198
- tin (Sn), see e.g. EP 1730322, US 2003/0003319
- manganese (Mn), see e.g. US 4677033
- molybdenum (Mo). EP 0188036

One of the drawbacks of the ternary, electroplated alloys is that the initial adhesion build-up in cobalt-free rubber compounds is slower than with the regular brass alloy. This problem also occurs for nickel as explained in EP 0343254. Too slow adhesion build-up increases the tyre vulcanisation cycle which leads to lower production throughput. Although this slow initial vulcanisation ramp up can be compensated by adding cobalt organic complexes in the rubber, this annihilates again the advantages of the ternary coating. This was one of the reasons why ternary alloy coatings were not successful in the 80's of last century.

**Disclosure of Invention**

It is therefore an object of the invention to further improve the prior-art notably to improve the ternary brass coatings on steel cord. It is a further object of the invention to provide a steel cord with a ternary or quaternary brass-based alloy coating that has improved adhesion retention and more in particular has a fast adhesion build-up. It is a still further object of the invention to provide a method of how to produce such an improved steel cord with ternary or quaternary alloy coating. It is also an object of the invention to provide for an adhesion system between rubber and steel cords wherein the rubber is free from added organic cobalt complexes.

According a first aspect of the invention there is provided a steel cord for reinforcing rubber articles.

The term "steel cord" should be considered in its broadest meaning: a single filament - for example a bead wire or a hose wire - is considered a "steel cord" too. On the other hand the steel cord can be made up of multiple filaments cabled or bunched together into a strand or even simply bundled together into a bundle of substantially parallel filaments. Such strands or bundles on their turn can be cabled or bunched together into a rope. All such assemblies - including the single filament - are - for the purpose of this application - considered as "steel cords".

The filaments of the steel cord comprise a steel substrate with a coating. A typical steel composition for use in a steel cord has a minimum carbon content of 0.65%, a manganese content ranging from 0.40% to 0.70%, a silicon content ranging from 0.15% to 0.30%, a maximum sulphur content of 0.03%, a maximum phosphorus content of 0.30%, all percentages being percentages by weight. There are only traces of copper, nickel and / or chromium. A typical steel composition for high-tensile steel cord has a minimum carbon content of around 0.80 weight %, e.g. 0.78 - 0.82 weight %. Also the "steel cord" does not necessarily solely exist out of "steel filaments": hybrid types of cords comprising other natural or man-made fibres such as aramid or nylon fibres are not excluded per se. The presence of a single steel filament is - for the purpose of this application - sufficient to consider it a "steel cord".

The focus of the invention is on the coating on the steel filament. The coating is made of an alloy that comprises copper and zinc and one or two additional metals. Hence, the coating is a ternary or quaternary brass based alloy.

The one additional metal can be cobalt (Co) which is most preferred. Equally preferred is nickel (Ni). Other preferred metals which are equally suitable are iron (Fe), tin (Sn), manganese (Mn), indium (In), bismuth (Bi), and molybdenum (Mo). For the case of iron (Fe), the iron must be integral to the alloy coating. Diffusion of iron from the steel substrate into the coating is therefore not considered and also does not improve adhesion retention up to the expected level.

As a further alternative, the coating can be a quaternary alloy comprising copper, zinc and two metals selected out of the group of Co, Ni, Fe, Sn, Mn, In, Bi, Mo. Again quaternary coatings in general and Cu-Zn-Ni-Co in particular are known (see EP 0175632). The latter is being most preferred.

The one or two additional metals to the brass is or are present in the bulk of the coating. Therewith is meant that the one or two metals cannot be discerned as layers in the coating i.e. the one or two metals occur through the complete thickness of the coating. One or two metals in the form of layers - like e.g. described in EP 0314230 or EP 0188036 - are therefore not considered. The one or two metals are present form the very first top layers down to the substrate. This can be ascertained by X-ray photoelectron spectroscopy as explained further on.

The thickness of the coating is between 50 and 400 nm, more preferably between 120 and 220 nm. This is the average thickness as it is usually determined using AAS (Atomic Absorption Spectroscopy) or ICP (Inductively Coupled Plasma) as described in the BISFA ("The International Bureau for the Standardisation of Man-made Fibres") Brochure *"Internationally agreed methods for testing steel tyre cord"*, method E11/1 *"Determination of mass and composition of brass coating: Atomic Absorption Spectroscopy,* method E11/2 *"Determination of mass and composition of brass coating: Inductively Coupled Plasma (ICP) method"* or method E11/4 *"Determination of mass and composition of brass coating: X-ray fluorescence - wet method",* but taking into account the presence of the one or two additional metals. Method E11/1, E11/2 and E11/4 express the result in 'B grams of coating per kg of coated wire'. This can easily be converted to the average thickness 't' (in nm) through

$$t = 235 \times B \times d$$

wherein in 'd' is the diameter of the filament in mm.

In the same measurement the mass concentration of the copper, zinc and the one or two additional metals can be determined. From the mass concentration, the atomic concentration of each of the metals can be calculated relative to the total number of atoms of coating metals. By preference the atomic concentration of copper is between 58 and 75 at%. The atomic concentration of the one additional metal or the sum of the atomic concentrations of the two additional metals is between 1 and 10 at%, the remainder of the atoms being zinc. Even more preferred is if the atomic concentration of the one additional metal or the sum of the atomic concentrations of the two additional metals is between 2 and 8 %.

Characteristic about the inventive cord is now that the amount of zinc, metallic as well as in the form of an oxide or hydroxide or any other form, that is present on the surface of the inventive coating - is greatly reduced compared to the known ternary or quaternary alloys. Indeed, as will be shown in the preferred embodiments of the text, the inventors found that by strongly reducing the zinc concentration at the surface the under cure (UC) adhesion results obtained in a cobalt-free compound can be greatly improved. This is the more remarkable in that this is contrary to what is normally expected in the "standard adhesion model" in that a thin but closed zinc oxide layer must be present in order to obtain good adhesion.

As explained in the background of the invention, the zinc oxide and copper oxide will readily form on the outer surface of the brass coating. Due to the high affinity to oxygen of zinc, the zinc oxide will grow faster and isolate the copper oxide from the remaining copper. Therefore the concentration of zinc increases strongly towards the surface as the zinc is drawn to the surface by the oxygen. Most of this zinc - in fact about 100 % - is present in the form of zinc oxide.

The relative presence of zinc, copper and the one or two additional metals through the coating can determined by performing an X-ray photo electron spectroscopy (XPS) in combination with depth profiling with an argon ion gun. XPS has become one of the standard surface analysis techniques and therefore has been chosen as the reference technique for this application. An early use of the technique is e.g. illustrated in "Industrial applications of XPS: Study of polymer-to-metal adhesion failure" by W.J. Van Ooij, A. Kleinhesselink and S.R. Leyenaar, Surface Science 89 (1979), p165-173. The technique is well known in the field and is readily available to the players in the field. In addition, besides photo electrons, Auger electrons can also be detected and the binding situation of the atoms derived there from. XPS is sometimes also referred to as ESCA (Electron Spectroscopy for Chemical Analysis). The accuracy of the technique has also increased over the years and powerful software tools have become available that allow good relative quantitative analyses within a few percent.

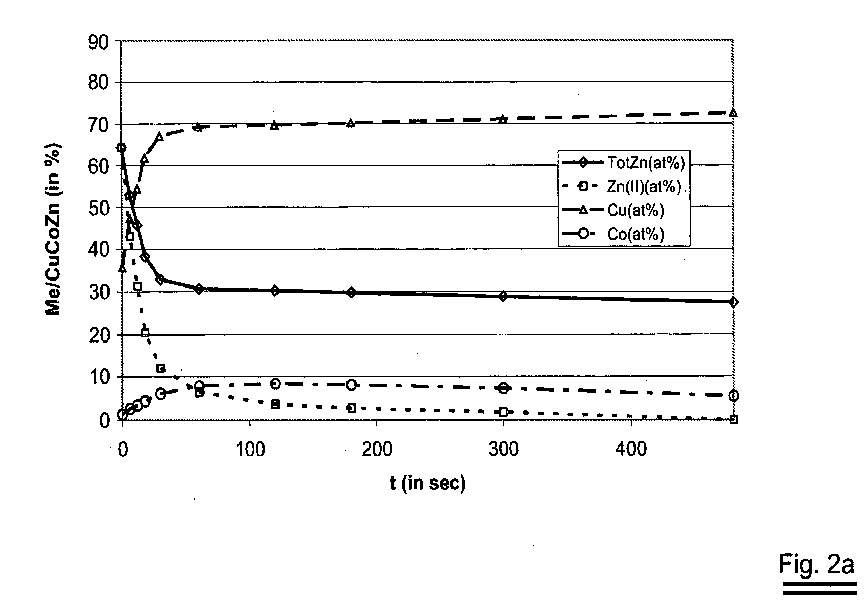

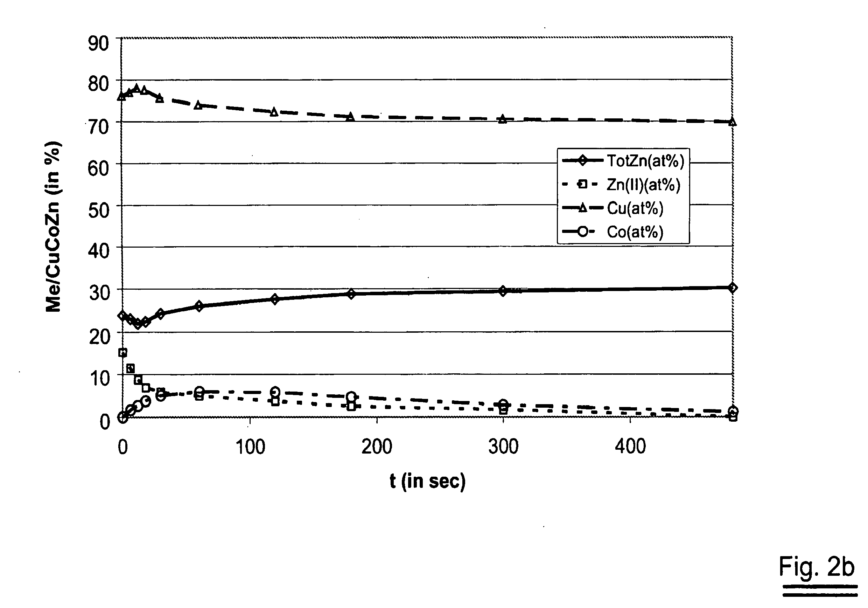

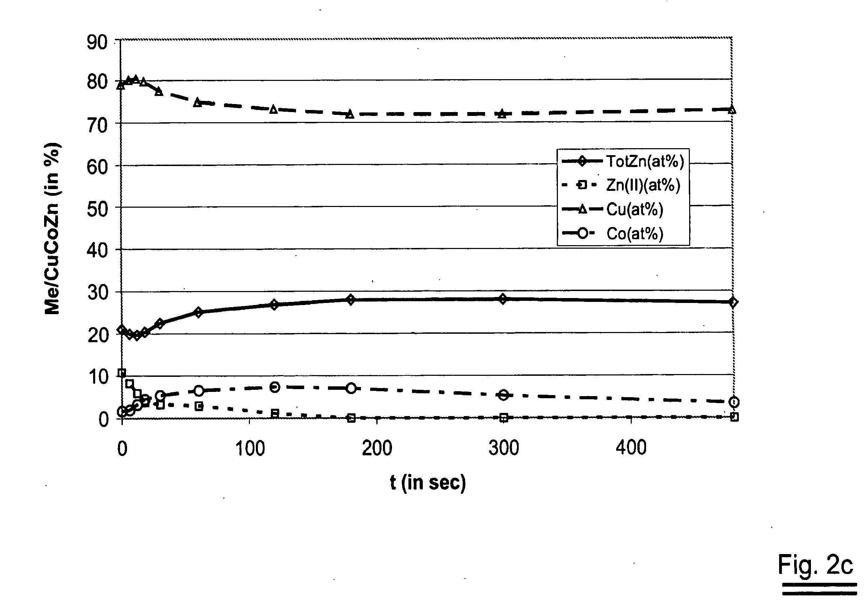

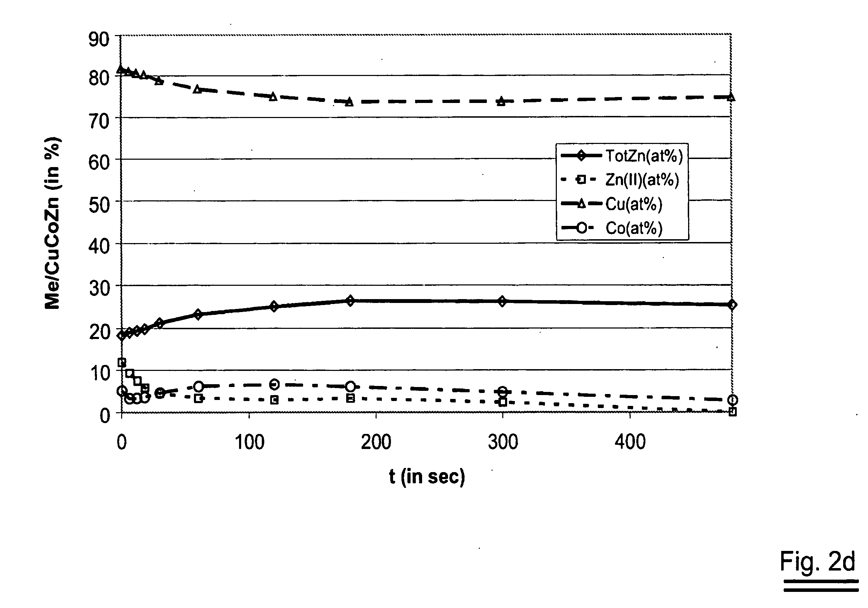

In what follows only surface analyses of bare steel cords are considered i.e. the surface of the steel cord has only been subjected to ambient air, temperatures and pressures. The surface of the steel cord has not reacted with any other substance such as e.g. sulphur in rubber. The steel cord surface is analysed in its 'as produced' state. The skilled person knows that such reaction will give rise to reaction products that alter the relative presence of the elements in the coating. An example of how the atomic abundance of the elements can change is e.g. illustrated in US 2003/0003319. There the profile of the coating is recorded before (Figure 1 of 2003/0003319) and after subjecting the sample to a sulphidisation reaction (Figure 2 of 2003/0003319).

The argon gun is set so that it sputters away the surface atoms at a rate of 0.1 nm/s when sputtering $\alpha$-iron (a 'normalised' Ar$^+$ beam). For the purpose of this application this sputter rate will be kept also for the coating of the steel cord (although this could be slightly different). In order to establish infringement the sputter rate should be calibrated to 0.1 nm/s on $\alpha$-iron.

In XPS a high-energy monochromatic X-ray impinges on the sample on a spot about 15 $\mu$m to 1 mm - preferably 100$\mu$m - in diameter under high vacuum conditions. The X-ray photons interact with atoms in the surface, which causes atoms to be ionized and electrons to be emitted by the photoemission process. The photoelectrons are measured by their kinetic energy EK, which depends on the energy 'hv' of the primary X-rays and the binding energy EB of the atomic orbital from which the electron originates; their relation is given by:

$$EK = hv - EB - W$$

Where W is the work function of the spectrometer. These binding energies (as several electrons can be ejected out of different atoms of the same metal) form a fingerprint for the presence of the metal.

XPS probes the presence of the atoms in a layer of about 3 to 5 nm below the analysis spot and the relative presence of the different elements can be derived at that spot. For the purposes of this application, only the presence of copper, zinc and the one or two metal is considered. Other elements (except hydrogen and helium) can also be detected but they are not to be considered for assessing the invention.

When now the abundance of Zn is measured relative to the total of zinc, copper and the one or two other metals, as a function of depth, the inventive coating discriminates itself from the prior-art coatings in that in the first, about ten nanometers of the coating the abundance of zinc atoms is lower than the abundance of zinc at or deeper than about ten nanometer in the coating.

The phrasing "about ten nanometers" takes into account the uncertainty of the sputtering rate of the argon gun. Although the sputtering rate can be calibrated precisely on $\alpha$-iron, there are matrix effects that do not allow straightforward extrapolation of this sputter rate to the coating alloy. The depth of "about ten nanometer" corresponds to a sputtering time of precisely 100 seconds with the calibrated argon gun. In reality, the sputtering depth after 100 seconds on the coating alloy will not be much different from ten nanometer (it is estimated to be from 8 to 15 nanometer).

In alternative but equivalent wording: at each measuring point made at different cumulative sputtering times shorter than 100 seconds, the abundance of zinc relative to that of copper, zinc and the one or two other metals is lower or equal than that measured at 100 seconds or more of sputtering with a normalised $Ar^+$ beam.

The ejection of a photo electron will also result in a re-arrangement of the remaining electrons in the shell of the excited ions, whereby an outer electron will fill up the gap. This relaxation releases energy that is emitted either in the form of an X-ray fluorescence photon or an Auger electron. The kinetic energy of the Auger electron is lower than that of the photoelectron (as it originates from an outer electron shell i.e. with a lower binding energy) and in addition, the energy differs from the chemical binding configuration of the atom. In the case of zinc, the LMM relaxing Auger electrons give information on whether zinc is present in its unbound metallic state ($Zn^0$) or whether it is present in an oxygen bound state (ZnO), or in hydroxide form ($Zn(OH)_2$). 'L' and 'M' indicate the main quantum number of the electrons involved: an 'L' shell electron is ejected by the impinging beam, whose place is filled with an 'M' shell electron, while another 'M' shell electron leaves the atom as an Auger electron. By deconvolution of the Auger electron energy spectrum by means of a principal components analysis the chemical binding configuration of the zinc atoms can be determined throughout the depth profile of the coating.

The analysis of the Auger electron spectrum of the coating according the invention shows that zinc atoms are present in metallic form within the first few nanometers of the coating. The remainder of the zinc atoms is present in an oxygen bound state. By preference at least one in four zinc atoms are present in the metallic state within the first few nanometers of the coating, the remainder of the zinc atoms being in an oxygen bound state. It is also possible that one in three zinc atoms is present in its metallic form the remainder of the zinc atoms being in an oxygen bound state.

With the first few nanometers is meant: the probing depth of the X-ray irradiation at the very surface i.e. when less than 10 seconds of sputtering has taken place. This probing depth scales with the penetration depth of the X-ray beam. The penetration depth of the beam will depend on the energy of the X-ray irradiation. For most XPS analysers this is about 3 to 5 nm. In case of dispute the X-ray probing energy must be set to that of monochromatized $AlK_\alpha$ radiation (1486.6 eV).

The reduced amount of zinc (in any form either metallic or oxidised) at the surface of the coating is differing from previously known ternary or quaternary coatings. Such a reduced zinc amount is indicative for a lack of zinc oxide at the surface as shown in XPS Auger electron analysis. This is contradictory to what is generally recommended and observed in the field in that a brass coating should have a closed zinc oxide skin where through copper atoms must diffuse in order to reach the surface (cfr. standard adhesion model).

According a second aspect of the invention there is provided a method to produce a steel cord.

The method starts from an intermediate steel wire diameter of a size and composition suitable to make steel cord from. After cleaning, the wire is electrolytically coated with copper. This can be done in any copper deposition bath known in the art such as a copper sulphate or copper pyro phosphate bath or a sequential combination of both.

Next the copper coated intermediate diameter wire is electrolytically coated with a third metal chosen from the group consisting of cobalt, nickel, tin, indium, manganese, iron, bismuth and molybdenum. Suitable baths exist for each of these: e.g. for cobalt a cobalt sulphate solution is suitable as explained in US 4255496, for nickel a Watts bath can be used (see e.g. GB 2039580), for manganese a manganese sulphate bath can be used as e.g. disclosed in US 4677033, for iron a ferrous ammonium sulphate bath can be used (see e.g. US 4446198).

Optionally, this can be followed by the electrolytic deposition of a fourth metal. If this optional route is not followed, a ternary alloy will result, while if it is taken, a quaternary alloy will be formed.

Finally the coating sequence is concluded with the electrolytic deposition of zinc, which is usually done in a zinc sulphate bath.

One should take care that subsequent metals are deposited in their order of nobility starting with the metal with the highest nobility (that will be copper). In this way unwanted dissolving of the previously deposited layer can be prevented. So the third metal should be less noble than the copper, the optional fourth metal is less noble than the third metal and zinc must be less noble than the third and fourth metal.

The thickness or amount of different metals can be controlled by the deposition current and dwell time in the different baths. The amount of copper, zinc, third and optional fourth metal to be deposited on the intermediate diameter wire is selected so as to obtain a coating on the finally drawn filament that comprises between 58 and 75 atomic percent of copper, and between 1 and 10 atomic percent, or more precisely between 2 and 8 atomic percent, in total of said third and optional fourth metal, where the atomic percentages are taken relative to the total amount of copper, zinc, third metal and optional fourth metal atoms only. The skilled person knows how to calculate back the needed amounts of metals on the intermediate diameter wire to obtain the desired quantities on the final filament.

After coating the different layers are diffused into one another in order to obtain the alloy. Diffusion is done by thermal input by e.g. resistive heating, furnace heating (in vacuum or under protective atmosphere) or inductive heating. It may be necessary - depending on the used diffusion technology - to remove superficial zinc oxide after diffusion to improve the drawing of the filament in the subsequent step. This is known in the field: see e.g. EP 1295985, [0042], step (5).

Drawing is done in a lubricant through a die series known to the skilled person as wet wire drawing. During drawing the tensile strength of the wire increases at each diameter reduction.

The filament on its own can be regarded as a steel cord. But in most cases, different filaments will be assembled together to form a multifilament steel cord. Assembling can be done through cabling, bunching or bundling of the filaments as the skilled person knows.

During the process steps of wet wire drawing a layer of zinc oxide will form. Contrary to the established standard adhesion model it is best to remove this zinc oxide layer as was found by the inventors. There are two possible instances where the zinc oxide can be removed:

- The zinc oxide can be removed from the assembled steel cord.
- The zinc oxide can be removed from the individual filaments prior to the assembly of the filaments into a steel cord.

Of course the surfaces can also be cleaned at both instances i.e. as well as on filament level as on steel cord level. Cleaning the zinc oxide from the assembled steel cord is somewhat more preferred as many filaments are cleaned at once.

Removal of this zinc oxide can be done in a number of ways:

First there are chemical means to remove the zinc oxide by cleaning the steel cords such as cleaning the steel cord in an acidic or alkaline solution.

For acidic cleaning the following acid solutions are preferred: phosphoric acid, sulphuric acid, nitric acid, acetic acid, citric acid, tartaric acid, hydrochloric acid.

For alkaline cleaning the following alkaline solutions are preferred: sodium hydroxide, potassium hydroxide, calcium hydroxide, magnesium hydroxide, ammonia, methylamine.

Normally the cleaning is performed by dipping in a tank, rinsing with water and drying.

Secondly there is the possibility of plasma cleaning as e.g. described in EP 0270144. The plasma cleaning may occur under low pressure conditions or it can even be performed under atmospheric conditions.

According a third aspect of the invention a reinforced rubber article is provided. The inventive steel cord is particularly suited to reinforce rubber articles such as tyres (of all kinds: passenger, truck, light van, off-the-road, airplane), belts (conveyor belts, timing belts, flat belts, elevator belts), hoses (high pressure hydraulic hoses, flexible pipes, drilling hoses), rubber coated ropes (such as elevator ropes, or sawing ropes). The inventive steel cord is most appropriate to reinforce rubber compounds that are substantially free of cobalt.

## Brief Description of Figures in the Drawings

FIGURE 1 a shows a schematic drawing of the different layers of a binary brass coating.

FIGURE 1b shows the known binary brass coating after vulcanisation in rubber.

FIGURE 2a shows the relative elemental composition of Cu-Co-Zn as obtained by XPS on a ternary coating of Cu-Co-Zn as known in the prior-art.

FIGURES 2b, 2c, 2d show the relative elemental composition of Cu-Co-Zn as obtained by XPS according the inventive ternary alloy by cleaning in different reagents.

FIGURE 3 shows a Wagner plot that identifies the different energies of photoelectrons and of Auger relaxing electrons of zinc atoms at the indicated binding configurations.

## Mode(s) for Carrying Out the Invention

In what follows detailed embodiments of the invention as well as an illustration of the prior-art with its associated problems are explained.

First, different samples according the prior-art with regular brass and with ternary Cu-Co-Zn were made by means of sequential plating on an intermediate high carbon (0.80 wt%C) wire with diameter 1.44 mm.

The following production sequence was followed:

1. Pre-treatment of the wire:

Dip in hydrochloric acid HCl solution (220 g/l at 60°C), followed by Electrochemical pickling in sulphuric acid ($H_2SO_4$ 600 g/l at 25 °C with a current density of 250 A/dm$^2$);

2. Electroplating copper from copper pyro phosphate ($Cu_2P_2O_7$) solution. The solution contained 25 g/l Cu and 180 g/l pyro phosphate at a temperature of 45 °C and a pH of about 8.2. Current density was 8.6 A/dm$^2$;

3. Electroplating cobalt from cobalt sulphate ($CoSO_4$) solution containing 40 g/l Co at 45 °C held at a pH 2.5 to 3;

4. Electroplating zinc from zinc sulphate ($ZnSO_4$) solution containing 50 g/l Zn at 25 °C held at a pH of 2 with a current density of 8.8 A/dm$^2$;

5. The coated intermediate wire was passed through a mid-frequent induction heating coil for formation of the ternary alloy;

6. The excess zinc oxide, formed during the thermal diffusion process, was removed by dipping the wire in a phosphoric acid ($H_3PO_4$ with a concentration of 30 g/l held at room temperature), followed by a water rinse and drying;

7. The intermediate diameter wire was wet wire drawn to a filament diameter of 0.26 mm;

8. Three wires were bunched together to a 3×0.26 High Tensile steel cord.

Three different samples were made:

- Sample A: a reference sample of 63.5% wt% Cu (or 64.2 at %) brass without cobalt. No electrolytic deposition of Co was done i.e. step 3 was not performed;
- Sample B: a prior-art sample of 63.5% wt% Cu brass with 7.5 wt% Co (63.6 at% Cu, 8.1 at% Co). In step 3 a current density of 22 A/dm$^2$ was applied in the bath;
- Sample C: a prior-art sample of 63.5% wt% Cu brass with 4.0 wt% Co (63.9 at% Cu, 4.3 at% Co). In step 3 a current density of 12 A/dm$^2$ was applied in the bath;

A target weight of 2.9 to 3.3 g/kg on final drawn filament was aimed at for all samples (corresponding to an average coating thickness of 174 to 198 nm).

ASTM adhesion tests were performed in two different research compounds (CMPD1) and (CMPD2). The composition of the compounds is given in Table I. Important is that CMPD1 is a compound containing cobalt salts while CMPD2 is a cobalt free compound. An embedment length of 7.5 mm was used, samples were cured at 150°C and each sample was repeatedly tested at least 6 times.

The following adhesion tests were done:

- Under cure (UC) 10 minutes at 150°C
- Regular cure (RC) 17 minutes at 150°C
- Over cure (OC) 400 minutes at 150°C

Regular cure samples were further subjected to adhesion retention tests:

- Cured humidity for 3, 7 and 14 days at 93°C and 95% relative humidity (indicated with CH3, CH7 and CH14 in what follows)
- Steam aged for 1 and 2 days at 105°C (shortened to SA1 and SA2)

The results of the pull out tests of samples A, B and C in CMPD2 and of samples A and B in CMPD1 are summarized in table II. Table III shows the 'Rubber Coverage Degree' for the pulled out ends obtained in the adhesion tests.

From these tables the problem with the reference sample A and prior-art samples B and C is apparent:

- Binary brass coatings show good adhesion results in UC, RC and OC but inferior adhesion retention results (CH, SA) when used in cobalt free compounds (sample A in CMPD2). This problem can be solved by adding cobalt containing compounds to the rubber compound (sample A in CMPD1). This is the solution used in the tyres of today.
- Ternary brass coatings Cu-Co-Zn show superior adhesion retention behaviour in cobalt free compounds (Samples B and C in CMPD2) compared to the reference sample A but show poor adhesion build-up (UC and RC is lower than for reference sample A). The adhesion reaction even slows down with increasing cobalt content (samples C and B in CMPD2).
- In order to correct this, one can consider adding cobalt compounds to the rubber compound again (Sample B in CMPD1). However, the results do not show a marked improvement with the normal brass coating (sample A in CMPD1).

This is one of the reasons why ternary alloys (such as Cu-Co-Zn) were not successful in the past: it was not possible to eliminate the use of cobalt salts in the rubber compound completely.

It was now found by the inventors that by cleaning the surface of ternary alloy samples in an acid solution such as phosphoric acid (20 wt% of $H_3PO_4$ at 40°C), followed by rinsing in demineralised water and drying, this adverse,behaviour of prior-art ternary alloys could be overcome. Samples D and E were prepared and subjected to identical adhesion tests in this way. Sample D is cleaned sample B, while sample E is cleaned sample C. Again the same adhesion curing tests and adhesion retention tests were done. The results are summarised in column (6) and (7) of table II and III.

The results obtained on cleaned ternary alloy samples turned out to show markedly better adhesion results in UC, RC as well as after CH and SA and this in CMPD2 a cobalt free compound! Looking at the average and standard deviation ('std') of the results in column (6) and (7) the average is not only the highest, but also the deviations are lowest. The results of the RCD follow in this respect closely the POF results. This is the ideal adhesion coating:

- high adhesion levels are obtained quickly, and
- are retained in extreme circumstances, and
- without any cobalt containing substance in the rubber compound.

When now seeking what exactly happened at the surface of the sample, XPS profiles were taken of:

- Sample C as such (see FIGURE 2a)
- Sample C cleaned in sulphuric acid (see FIGURE 2b)
- Sample C cleaned in phosphoric acid (i.e. the same as sample E that gave the best overall adhesion results, (see FIGURE 2c))
- Sample C cleaned in sodium hydroxide (see FIGURE 2d)

XPS data were acquired by using a Physical Electronics Quantum 2000 Scanning ESCA Microprobe. The system uses monochromatized $AlK_\alpha$ radiation (1486.6 eV) as the excitation source. The analyser with take-off angle of 45° was operated at a constant pass energy of 23.5 eV. Depth profiling was performed using the $Ar^+$ ion gun (2.5 keV) with a sputtering rate of 0.1 nm per second (for $\alpha$-iron). The operating pressure during analysis was in the low $10^{-8}$ Torr range. All spectra were acquired with an X-ray spot of 100 $\mu$m diameter. The spectra recorded were those of photo emitted electrons of carbon (C, 1 s electrons), oxygen (0,1s), sulphur (S, 2p), iron (Fe, 3p), copper (Cu, $2p^3$ and $L_3M_{45}M_{45}$ Auger electrons), zinc (Zn, $2p^3$ and $L_3M_{45}M_{45}$ Auger electrons) and cobalt (Co, $2p^3$).

The obtained spectra were analysed with ULVAC-PHI Multipak version 8.0. The XPS data analysis included smoothing via the Savitsky-Golay method, non-linear (Shirley) background substraction and target factor analysis (TFA) on the zinc Auger lines.

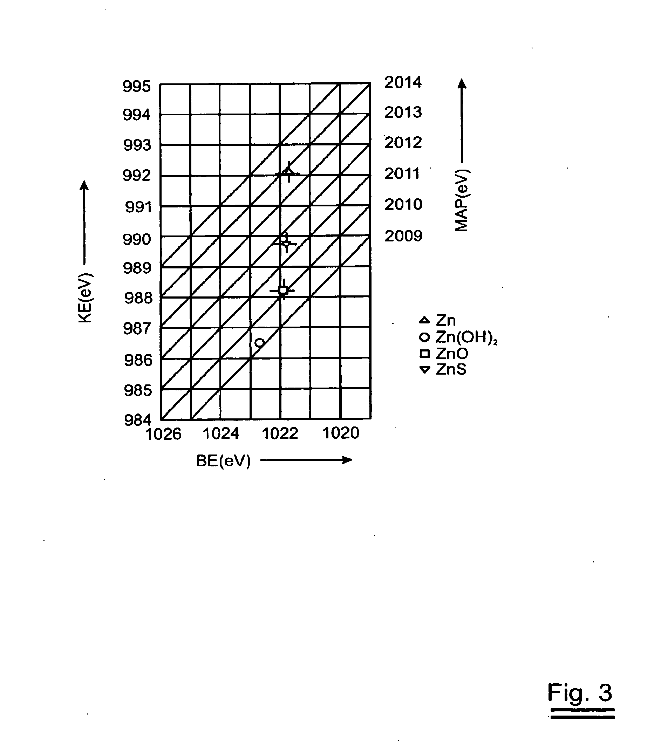

The zinc Auger lines shift with the chemical binding surroundings as shown in FIGURE 3. This is a so-called Wagner plot wherein measured values of kinetic energies (KE) of specific Auger peaks are plotted against the measured binding energies (BE) of the related photoelectron transition, for the compounds specified (Zn, ZnO, $Zn(OH)_2$). The diagonal lines are the Modified Auger Parameter which is the sum of both KE and BE. When making a principal components analysis (PCA) centred on these line energies, an estimation of the presence of the different zinc compounds can be inferred. This method was used to detect how much zinc oxide was present on the surface of the samples.

The FIGURES 2, show in abscissa the total sputtering time in seconds at which sputtering was stopped and detailed spectra - the measuring points - were taken. 100 seconds correspond to about 10 nanometer, as explained before. In ordinate the percentage of detected electrons for a specific metal ("Me", either Cu, Co or Zn) relative to the total ("CuCoZn") of the detected electrons of copper, zinc and cobalt is shown. Hence, "Cu(at%)" ($\Delta$) indicates the relative amount of copper throughout the coating, while "Co(at%)" ($\bigcirc$) indicates the relative amount of cobalt through the coating. As these are based on photo electrons, no discrimination is made as towards binding state. "TotZn(at%)" ($\Diamond$) indicates the relative amount of zinc in the coating (irrespective of the binding state) as detected by photo electrons, while "Zn(II)(at%)" ($\square$) indicates the relative number of atoms in the ZnO bound state (again relative to the total number of Cu-Co-Zn atoms). This subdivision is based on the PCA analysis of the Auger electrons coming from the zinc atoms only.

FIGURE 2a clearly illustrates that even for a ternary Cu-Co-Zn coating, zinc is most prominently present at the surface, while the concentration of zinc diminishes deeper into the coating. As is clear from the "Zn(II)" curve: all zinc present at the surface is present as zinc oxide. Hence - even in a ternary coating - the zinc will be drawn to the surface to form its oxide there. Inside the coating the zinc signal drops off strongly. So the presence of zinc is a decaying function throughout the first about 10 nanometers (first total of 100 seconds sputtering time) of the coating.

The presence of copper or cobalt is suppressed at the surface due to the competition with zinc. As towards the presence of cobalt: there is no indication for a cobalt rich layer as the cobalt curve is substantially uniformly present throughout the bulk of the coating.

When now the Cu-Co-Zn ternary alloy coated sample is cleaned in phosphoric acid, the situation totally reverses: FIGURE 2c. The total zinc in the first about ten nanometers, i.e. after 100 seconds sputtering, remains below the amount of zinc at that ten nanometers. Moreover: deeper than ten nanometers the zinc amount does not change appreciably. A very small zinc enrichment may still occur at the surface, but the maximum of this enrichment remains below the zinc amount at ten nanometer deep. The zinc surface enrichment is again due to the presence of zinc oxide as can be inferred from the "Zn(II)(at%)" curve. However, the zinc enrichment is much less than in the original sample C (FIGURE 2a) and the curves illustrate that metallic zinc is present at the surface of the coating. Indeed, there is a substantial difference between the total zinc and the oxygen bound zinc i.e. zinc is present in its metallic form. This is the more remarkable in that - although the sample has been stored for several days in ambient atmosphere - no exceptionally thick zinc oxide formation is observed. Less than half of the zinc atoms present within the first about ten nanometers of the coating - corresponding to the first measuring point - are bound to oxygen.

FIGURE 2 'b' and 'd' illustrate that other means for cleaning the surface (such as sulphuric acid and sodium hydroxide) lead to similar profiles within the coating. The same positive influences on adhesion have been confirmed on these samples.

Besides treatment of the steel cord with acid or alkaline solutions, the samples B and C have also been cleaned with:

- MEK (methylethylketone, a strong organic solvent) at room temperature
- Boiling water at 100°C
- Isopar N (paraphene solvent)
- EC cleaner 20 % at room temperature.

In none of the above cases an improved adhesion behavior was found. This eliminates that the improved adhesion could be due to the elimination of organic residues of e.g. lubricants.

At present it is not clear how these results can be explained in terms of the standard adhesion model. The fact that the inventive samples show an almost perfect adhesion behaviour in cobalt free compounds is therefore totally unexpected.

Table I

| Ingredient | CMPD1 | CMPD2 |
|---|---|---|
| Natural rubber TSR10 | 100 parts | 100 parts |
| ZnO - Zinc oxide | 9 phr | 9 phr |
| Stearic acid | --- | 0.7 phr |
| Carbon black HAFLS N326 | 65 phr | 65 phr |
| Anti-degradation compound 6PPD (*) | 1.8 phr | 1.8 phr |
| Sulphur source Crystex HSOT20 | 6.4 phr | 6.4 phr |
| Accelerator DCBS | 0.8 phr | --- |
| Cobalt salt Manobond 680C | 0.27 phr | --- |
| Accelerator TBBS | --- | 0.7 phr |
| Retarder PVI | --- | 0.25 phr |
| phr: parts per hundred parts of rubber<br>(*) 6PPD is n-1,3, dimethyl-n'-phenyl-p-phenylenediamine | | |

Table II (font size of numbers is proportional to their magnitude)

| POF(N) | CMPD2, Co-free compound | | | CMPD1, Co-containing compound | | CMPD2 Co-free compound | |
|---|---|---|---|---|---|---|---|
| | (1) | (2) | (3) | (4) | (5) | (6) | (7) |
| Test | A | C | B | A | B | E | D |
| UC | 307 | 238 | 135 | 317 | 325 | 310 | 318 |
| RC | 325 | 283 | 234 | 325 | 321 | 299 | 308 |
| OC | 232 | 224 | 245 | 249 | 237 | 242 | 225 |
| CH3D | 138 | 262 | 254 | 255 | 261 | 281 | 281 |
| CH7D | 118 | 275 | 265 | 185 | 201 | 250 | 268 |
| CH14D | 137 | 232 | 238 | 164 | 167 | 247 | 220 |
| SA1D | 172 | 314 | 305 | 293 | 301 | 295 | 303 |

(continued)

| POF(N) | CMPD2, Co-free compound | | | CMPD1, Co-containing compound | | CMPD2 Co-free compound | |
|---|---|---|---|---|---|---|---|
| | (1) | (2) | (3) | (4) | (5) | (6) | (7) |
| Test | A | C | B | A | B | E | D |
| SA2D | 131 | 300 | 321 | 213 | 186 | 276 | 234 |
| Average | 195 | 266 | 250 | 250 | 250 | 275 | 270 |
| Std | 82,8 | 32,8 | 55,9 | 59,7 | 62,0 | 25,9 | 39,2 |

Table III (font size of numbers is proportional to their magnitude)

| RCD (%) | CMPD2, Co-free compound | | | CMPD1, Co-containing compound | | CMPD2. Co-free compound | |
|---|---|---|---|---|---|---|---|
| | (1) | (2) | (3) | (4) | (5) | (6) | (7) |
| Test | A | C | B | A | B | E | D |
| UC | 89 | 60 | 30 | 97 | 92 | 93 | 93 |
| RC | 91 | 85 | 70 | 93 | 93 | 85 | 93 |
| OC | 86 | 90 | 98 | 92 | 93 | 73 | 90 |
| CH3D | 55 | 90 | 90 | 88 | 87 | 88 | 93 |
| CH7D | 38 | 93 | 85 | 75 | 72 | 85 | 90 |
| CH14D | 64 | 95 | 95 | 60 | 65 | 93 | 90 |
| SA1D | 66 | 98 | 100 | 90 | 90 | 93 | 100 |
| SA2D | 46 | 95 | 98 | 76 | 78 | 90 | 75 |
| Average | 67 | 88 | 83 | 84 | 84 | 88 | 91 |
| std | 20,2 | 12,1 | 23,6 | 12,5 | 10,8 | 6,8 | 7,1 |

**Claims**

1. A steel cord for reinforcing rubber articles comprising one or more filaments having a steel wire substrate with a coating of an alloy comprising copper, zinc and one or two metals selected from the group consisting of cobalt, nickel, tin, indium, manganese, iron, bismuth and molybdenum, said one or two metals being present through the bulk of said coating, **characterised in that**
   the abundance of zinc atoms detectable in the first, about ten nanometers of said coating is lower than the abundance of zinc atoms detectable at or deeper than about ten nanometers in said coating, said abundance of zinc atoms being detected through X-ray photoelectron spectroscopy on the surface of the steel cord in its as produced state, said abundance being taken relative to the total of zinc, copper, one or two metals atoms.

2. The steel cord of claim 1 wherein said one metal is cobalt or nickel or said two metals are cobalt and nickel.

3. The steel cord according to any one of claims 1 to 2 wherein within the probing depth of the X-ray irradiation at the very surface of said coating, zinc atoms are present in the metallic state, the state of said zinc atoms being derived from the energy spectrum of LMM relaxing Auger electrons as measured by X-ray photoelectron spectroscopy.

4. The steel cord according to any one of claims 1 to 3 wherein within the probing depth of the X-ray irradiation at the very surface of said coating, at least one in four of the zinc atoms is present in its metallic state, the remainder of said zinc atoms being in an oxygen bound state, the state of said zinc atoms being derived from the energy spectrum of LMM relaxing Auger electrons as measured by X-ray photoelectron spectroscopy.

5. The steel cord according to any one of claims 1 to 4 wherein the atomic concentration of said one metal or two metals taken together is between 1 and 10 %, and the atomic concentration of copper is between 58 and 75%, the remainder being zinc atoms, said atomic concentration being taken over the bulk of the coating and relative to the total number of atoms of copper, zinc and said one metal or two metals.

6. The steel cord according to any one of claims 1 to 4 wherein the atomic concentration of said one metal or two metals taken together is between 2 and 8 %, and the atomic concentration of copper is between 58 and 75%, the remainder being zinc atoms, said atomic concentration being taken over the bulk of the coating and relative to the total number of atoms of copper, zinc and said one metal or two metals.

7. A method to produce a steel cord with improved adhesion performance suitable for reinforcing a rubber article, with one or more filaments, comprising the steps of:

   • providing a cleansed intermediate diameter wire of a size and steel composition suitable for making steel cord from;
   • electrolytically coating said intermediate diameter wire with an amount of copper;
   • electrolytically coating said copper coated intermediate diameter wire with an amount of a third metal;
   • optionally electrolytically coating said copper and third metal coated intermediate wire with an amount of fourth metal;

   said third or fourth metal being chosen from the group consisting of cobalt, nickel, tin, indium, manganese, iron, bismuth and molybdenemum.

   • electrolytically coating said copper, third metal and optional fourth metal coated intermediate diameter wire with an amount of zinc;
   • diffusing the copper, zinc, third metal and optional fourth metal into an alloy by applying heat to said intermediate diameter wire;
   • wet wire drawing said coated intermediate wire to final diameter to produce a filament;
   • optionally assembling two or more of said filaments into said steel cord;

   **characterised in that**
   said steel cord is cleaned for removing zinc oxide that is formed during or after said wet wire drawing step from the surface of said steel cord.

8. The method of claim 7 but **characterised in that** said filaments are cleaned for removing zinc oxide from the surface of said filaments prior to assembling or not assembling them into said steel cord.

9. The method according to claim 7 or 8 wherein said step of cleaning said steel cord or filaments is by cleaning with an acidic or alkaline solution.

10. The method of claim 9 wherein said removal from excess zinc oxides from the surface of said filaments is by cleaning in a solution of any one of the following: phosphoric acid, sulphuric acid, nitric acid, acetic acid, citric acid, tartaric acid, hydrochloric acid.

11. The method of claim 9 wherein said removal from excess zinc oxides from the surface of said filaments is by cleaning in a solution of any one of the following: sodium hydroxide, potassium hydroxide, calcium hydroxide, magnesium hydroxide, ammonia, methylamine.

12. The method according to any one of claims 7 to 11 wherein the amount of copper, zinc, third and optional fourth metal is selected to obtain a coating on said filament that comprises between 58 and 75 atomic percent of copper, and between 1 and 10 atomic percent in total of said third and optional fourth metal, said atomic percentages being taken relative to the total amount of copper, zinc, third metal and optional fourth metal atoms.

13. A reinforced rubber article comprising a rubber compound and a reinforcement element **characterised in that** said reinforcement element is a steel cord according any one of the claims 1 to 6.

14. The reinforced rubber article according to claim 13 wherein said rubber compound is free of added cobalt.

15. The reinforced rubber article according to claim 13 or 14 wherein said rubber article is one of the following: a tyre, a hose, a belt, a rubber coated steel cord.

**Patentansprüche**

1.  Stahlcord zur Verstärkung von Kautschukartikeln, umfassend ein oder mehrere Filamente mit einem Stahldrahtsubstrat mit einer Beschichtung aus einer Kupfer, Zink und ein oder zwei Metalle aus der Gruppe bestehend aus Cobalt, Nickel, Zinn, Indium, Mangan, Eisen, Bismut und Molybdän umfassenden Legierung, wobei das eine Metall bzw. die zwei Metalle über die Gesamtmasse der Beschichtung hinweg vorliegen,
    **dadurch gekennzeichnet, dass**
    die Häufigkeit von Zinkatomen, die in den ersten etwa zehn Nanometern der Beschichtung detektierbar ist, kleiner ist als die Häufigkeit von Zinkatomen, die bei etwa zehn Nanometern oder einer größeren Tiefe in der Beschichtung detektierbar ist, wobei die Häufigkeit von Zink-atomen durch Röntgenphotoelektronenspektroskopie an der Oberfläche des Stahlcords in seinem wie bei der Herstellung anfallenden Zustand detektiert wird, wobei die Häufigkeit relativ zur Summe von Zink-, Kupfer- und einem oder zwei Metallatomen genommen wird.

2.  Stahlcord nach Anspruch 1, wobei es sich bei dem einen Metall um Cobalt oder Nickel handelt bzw. es sich bei den zwei Metallen um Cobalt und Nickel handelt.

3.  Stahlcord nach einem der Ansprüche 1 bis 2, wobei in der Abtasttiefe der Röntgenbestrahlung genau an der Oberfläche der Beschichtung Zinkatome im metallischen Zustand vorliegen, wobei der Zustand der Zinkatome aus dem Energiespektrum von LMM-relaxierenden Auger-Elektronen gemäß Messung durch Röntgenphotoelektronenspektroskopie abgeleitet wird.

4.  Stahlcord nach einem der Ansprüche 1 bis 3, wobei in der Abtasttiefe der Röntgenbestrahlung genau an der Oberfläche der Beschichtung mindestens ein Viertel der Zinkatome im metallischen Zustand vorliegt, wobei der Rest der Zinkatome in einem sauerstoffgebundenen Zustand vorliegt, wobei der Zustand der Zinkatome aus dem Energiespektrum von LMM-relaxierenden Auger-Elektronen gemäß Messung durch Röntgenphotoelektronenspektroskopie abgeleitet wird.

5.  Stahlcord nach einem der Ansprüche 1 bis 4, wobei die Atomkonzentration des einen Metalls bzw. der zwei Metalle zusammengenommen zwischen 1 und 10% liegt und die Atomkonzentration von Kupfer zwischen 58 und 75% liegt, wobei es sich bei dem Rest um Zinkatome handelt, wobei die Atomkonzentration über die Gesamtmasse der Beschichtung und relativ zur Gesamtzahl von Atomen von Kupfer, Zink und dem einen Metall bzw. den zwei Metallen genommen wird.

6.  Stahlcord nach einem der Ansprüche 1 bis 4, wobei die Atomkonzentration des einen Metalls bzw. der zwei Metalle zusammengenommen zwischen 2 und 8% liegt und die Atomkonzentration von Kupfer zwischen 58 und 75% liegt, wobei es sich bei dem Rest um Zinkatome handelt, wobei die Atomkonzentration über die Gesamtmasse der Beschichtung und relativ zur Gesamtzahl von Atomen von Kupfer, Zink und dem einen Metall bzw. den zwei Metallen genommen wird.

7.  Verfahren zur Herstellung eines Stahlcords mit verbesserter Haftungsleistung, der zur Verstärkung eines Kautschukartikels geeignet ist, mit einem oder mehreren Filamenten, das folgende Schritte umfasst:

    • Bereitstellen eines gereinigten, einen intermediären Durchmesser aufweisenden Drahts mit einer Größe und Stahlzusammensetzung, die zur Herstellung von Stahlcord daraus geeignet sind;
    • elektrolytisches Beschichten des einen intermediären Durchmesser aufweisenden Drahts mit einer Menge Kupfer;
    • elektrolytisches Beschichten des mit Kupfer beschichteten, einen intermediären Durchmesser aufweisenden Drahts mit einer Menge eines dritten Metalls;
    • gegebenenfalls elektrolytisches Beschichten des mit Kupfer und drittem Metall beschichteten, einen intermediären Durchmesser aufweisenden Drahts mit einer Menge eines vierten Metalls;

    wobei das dritte bzw. vierte Metall aus der Gruppe bestehend aus Cobalt, Nickel, Zinn, Indium, Mangan, Eisen, Bismut und Molybdän ausgewählt wird;

    • elektrolytisches Beschichten des mit Kupfer, drittem Metall und fakultativem viertem Metall beschichteten, einen intermediären Durchmesser aufweisenden Drahts mit einer Menge Zink;
    • Diffundierenlassen des Kupfers, Zinks, dritten Metalls und fakultativen vierten Metalls zu einer Legierung durch Anwenden von Wärme auf den einen intermediären Durchmesser aufweisenden Draht;

• Nassdrahtziehen des beschichteten intermediären Drahts auf den Enddurchmesser zur Herstellung eines Filaments;
• gegebenenfalls Zusammenlegen von zwei oder mehr der Filamente zu einem Stahlcord;

**dadurch gekennzeichnet, dass**
der Stahlcord zur Entfernung von während oder nach dem Nassdrahtziehschritt gebildetem Zinkoxid von der Oberfläche des Stahlcords gereinigt wird.

8. Verfahren nach Anspruch 7, aber **dadurch gekennzeichnet, dass** die Filamente vor dem gegebenenfalls erfolgenden Zusammenlegen zu dem Stahlcord zur Entfernung von Zinkoxid von der Oberfläche der Filamente gereinigt werden.

9. Verfahren nach Anspruch 7 oder 8, bei dem der Schritt des Reinigens des Stahlcords bzw. der Filamente durch Reinigen mit einer sauren oder alkalischen Lösung erfolgt.

10. Verfahren nach Anspruch 9, bei dem die Entfernung von überschüssigen Zinkoxiden von der Oberfläche der Filamente durch Reinigen in einer Lösung von Phosphorsäure, Schwefelsäure, Salpetersäure, Essigsäure, Citronensäure, Weinsäure oder Salzsäure erfolgt.

11. Verfahren nach Anspruch 9, bei dem die Entfernung von überschüssigen Zinkoxiden von der Oberfläche der Filamente durch Reinigen in einer Lösung von Natriumhydroxid, Kaliumhydroxid, Calciumhydroxid, Magnesiumhydroxid, Ammoniak oder Methylamin erfolgt.

12. Verfahren nach einem der Ansprüche 7 bis 11, bei dem die Menge von Kupfer, Zink, drittem und fakultativem viertem Metall so gewählt wird, dass eine Beschichtung auf dem Filament erhalten wird, die zwischen 58 und 75 Atomprozent Kupfer und insgesamt zwischen 1 und 10 Atomprozent des dritten und gegebenenfalls vierten Metalls umfasst, wobei die Atomprozentanteile relativ zur Gesamtmenge von Kupferatomen, Zinkatomen, Atomen des dritten Metalls und Atomen des fakultativen vierten Metalls genommen werden.

13. Verstärkter Kautschukartikel, umfassend eine Kautschukmasse und ein Verstärkungselement, **dadurch gekennzeichnet, dass** es sich bei dem Verstärkungselement um einen Stahlcord nach einem der Ansprüche 1 bis 6 handelt.

14. Verstärkter Kautschukartikel nach Anspruch 13, wobei die Kautschukmasse frei von zugesetztem Cobalt ist.

15. Verstärkter Kautschukartikel nach Anspruch 13 oder 14, wobei es sich bei dem Kautschukartikel um einen Reifen, einen Schlauch, ein Band oder einen kautschukbeschichteten Stahlcord handelt.

**Revendications**

1. Câble d'acier destiné à renforcer des objets en caoutchouc, comprenant un ou plusieurs filaments présentant un support en fil d'acier doté d'un revêtement d'un alliage comprenant du cuivre, du zinc et un ou deux métaux sélectionnés dans l'ensemble constitué du cobalt, du nickel, de l'étain, de l'indium, du manganèse, du fer, du bismuth et du molybdène, ledit métal ou lesdits deux métaux étant présents dans toute la masse dudit revêtement, **caractérisé en ce que**
l'abondance des atomes de zinc détectable dans environ les dix premiers nanomètres dudit revêtement est inférieure à l'abondance des atomes de zinc détectable à une profondeur égale ou supérieure à environ 10 nanomètres dudit revêtement, ladite abondance d'atomes de zinc étant détectée par spectroscopie de photoélectrons par rayons X à la surface du câble d'acier dans l'état qu'il présente à sa production, ladite abondance étant relative au total des atomes de zinc, de cuivre et du métal ou des deux métaux.

2. Câble d'acier selon la revendication 1, dans lequel ledit métal est le cobalt ou le nickel et lesdits deux métaux sont le cobalt et le nickel.

3. Câble d'acier selon l'une quelconque des revendications 1 et 2, dans lequel les atomes de zinc sont présents à l'état métallique à l'intérieur de la profondeur d'examen de l'irradiation par rayons X à la surface dudit revêtement, l'état desdits atomes de zinc étant dérivé du spectre d'énergie des électrons Auger de relaxation LMM mesuré par spectroscopie de photoélectrons par rayons X.

4. Câble d'acier selon l'une quelconque des revendications 1 à 3, dans lequel à l'intérieur de la profondeur d'examen de l'irradiation par rayons X à la surface dudit revêtement, au moins un atome de zinc sur quatre est présent à l'état métallique, les autres atomes de zinc étant à un état lié à l'oxygène, l'état desdits atomes de zinc étant dérivé du spectre d'énergie des électrons Auger de relaxation LMM mesuré par spectroscopie de photoélectrons par rayons X.

5. Câble d'acier selon l'une quelconque des revendications 1 à 4, dans lequel la concentration atomique dudit métal ou desdits deux métaux pris ensemble est comprise entre 1 et 10 % et la concentration atomique du cuivre est comprise entre 58 et 75 %, le reste étant formé d'atomes de zinc, ladite concentration atomique étant considérée sur la totalité du revêtement et par rapport au nombre total d'atomes de cuivre, de zinc et dudit métal ou des deux dits métaux.

6. Câble d'acier selon l'une quelconque des revendications 1 à 4, dans lequel la concentration atomique dudit métal ou desdits deux métaux pris ensemble est comprise entre 2 et 8 % et la concentration atomique en cuivre est comprise entre 58 et 75 %, le reste étant formé d'atomes de zinc, ladite concentration atomique étant considérée sur la totalité du revêtement et par rapport au nombre total d'atomes de cuivre, de zinc et dudit métal ou desdits deux métaux.

7. Procédé de production d'un câble d'acier présentant des performances d'adhérence améliorées et convenant pour renforcer un objet en caoutchouc et présentant un ou plusieurs filaments, le procédé comportant les étapes qui consistent à :

   prévoir un fil nettoyé d'un diamètre intermédiaire d'une taille et d'une composition d'acier qui convient pour fabriquer un câble d'acier,
   revêtir électrolytiquement ledit fil de diamètre intermédiaire d'une certaine quantité de cuivre,
   revêtir électrolytiquement ledit fil d'un diamètre intermédiaire revêtement de cuivre d'une certaine quantité d'un troisième métal,
   facultativement, revêtir électrolytiquement ledit fil intermédiaire revêtu de cuivre et d'un troisième métal d'une certaine quantité d'un quatrième métal,
   ledit troisième ou ledit quatrième métal étant sélectionnés dans l'ensemble constitué du cobalt, du nickel, de l'étain, de l'indium, du manganèse, du fer, du bismuth et du molybdène,
   revêtir électrolytiquement ledit fil de diamètre intermédiaire revêtu de cuivre, d'un troisième métal et facultativement d'un quatrième métal par une certaine quantité de zinc,
   faire diffuser le cuivre, le zinc, le troisième métal et facultativement le quatrième métal pour former un alliage en appliquant de la chaleur sur ledit fil de diamètre intermédiaire,
   étirer ledit fil en conditions humides ledit fil intermédiaire revêtu jusqu'à un diamètre final pour produire un filament,
   assembler facultativement deux ou plusieurs desdits filaments pour former ledit câble d'acier, **caractérisé en ce que**
   ledit câble d'acier est nettoyé en vue de retirer l'oxyde de zinc formé pendant ou après ladite étape d'étirage du fil en conditions humides de la surface dudit câble d'acier.

8. Procédé selon la revendication 7, **caractérisé en ce que** lesdits filaments sont nettoyés en vue d'enlever l'oxyde de zinc de la surface desdits filaments avant de les assembler ou de ne pas les assembler pour former ledit câble d'acier.

9. Procédé selon les revendications 7 ou 8, dans lequel ladite étape de nettoyage dudit câble d'acier ou des filaments consiste à les nettoyer à l'aide d'une solution acide ou alcaline.

10. Procédé selon la revendication 9, dans lequel ledit enlèvement des oxydes de zinc en excès de la surface desdits filaments s'effectue par nettoyage dans une solution contenant l'une quelconque des substances suivantes : acide phosphorique, acide sulfurique, acide nitrique, acide acétique, acide citrique, acide tartrique et acide chlorhydrique.

11. Procédé selon la revendication 9, dans lequel ledit enlèvement des oxydes de zinc en excès de la surface desdits filaments s'effectue par nettoyage dans une solution contenant l'une quelconque des substances suivantes : hydroxyde de sodium, hydroxyde de potassium, hydroxyde de calcium, hydroxyde de magnésium, ammoniac et méthylamine.

12. Procédé selon l'une quelconque des revendications 7 à 11, dans lequel la quantité de cuivre, de zinc, du troisième métal et facultativement du quatrième métal est sélectionnée de manière à obtenir un revêtement sur ledit filament qui comprend entre 58 et 75 pourcents atomiques de cuivre et entre 1 et 10 pourcents atomiques au total dudit troisième et dudit quatrième métal facultatif, lesdits pourcentages atomiques étant considérés par rapport à la quantité totale d'atomes de cuivre, de zinc, du troisième métal et du quatrième métal facultatif.

13. Objet en caoutchouc renforcé comprenant un composé de caoutchouc et un élément de renfort, **caractérisé en ce que** ledit élément de renfort est un câble d'acier selon l'une quelconque des revendications 1 à 6.

14. Objet en caoutchouc renforcé selon la revendication 13, dans lequel ledit composé de caoutchouc ne présente pas de cobalt ajouté.

15. Objet en caoutchouc renforcé selon les revendications 13 ou 14, dans lequel ledit objet en caoutchouc est l'un des objets suivants : un bandage de roue, un tuyau flexible, une courroie, ou un câble d'acier revêtu de caoutchouc.

**Fig. 1a**

**Fig. 1b**

Fig. 2a

EP 2 516 729 B1

Fig. 2b

Fig. 2c

Fig. 2d

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 515734 A
- EP 0265993 A
- JP 2003171887 B
- US 7152644 B
- EP 1243692 A
- KR 1020010019497
- WO 2006001199 A
- US 6372697 B
- EP 1172430 A
- EP 0314230 A
- EP 0872511 A
- US 4255496 A
- US 4265678 A
- EP 0343254 A
- GB 2039580 A
- US 4446198 A
- EP 1730322 A
- US 20030003319 A
- US 4677033 A
- EP 0188036 A
- EP 0175632 A
- EP 1295985 A
- EP 0270144 A

### Non-patent literature cited in the description

- Internationally agreed methods for testing of steel tyre cord. E12 Determination of static adhesion to rubber compounds. 1995
- **G. HAEMERS.** The Influence of the Interface Reaction on the Rubber-to-brass Adhesion and Adhesion Retention. *Adhesion,* 1980, vol. 4
- **W.J. VAN OOIJ.** Mechanisms and Theories of Rubber Adhesion to Steel Tire Cords, An Overview. *Rubber Chemistry and Technology,* 1983, vol. 57, 421
- **W.J. VAN OOIJ.** Rubber-Brass Bonding. Rapra Technology Ltd, 2001, 163-195
- **W.S. FULTON.** Steel tire cord-rubber adhesion, including the contribution of cobalt. *Rubber Chemistry and Technology,* 2005, vol. 78, 426-456
- Adhesion of Steel Tire Cord to Rubber- A Reviev. **W.J. VAN OOIJ ; PRASAN B. HARAKUNI ; GUY BUYTAERT.** Rubber Chemistry and Technology. 2009, vol. 82, 315-339
- **W.J. VAN OOIJ ; A. KLEINHESSELINK ; S.R. LEYENAAR.** Industrial applications of XPS: Study of polymer-to-metal adhesion failure. *Surface Science,* 1979, vol. 89, 165-173